# EUROPÄISCHE PATENTSCHRIFT

(11) **EP 2 429 801 B1**
(45) Veröffentlichungstag und Bekanntmachung des Hinweises auf die Patenterteilung: **24.01.2018**
(21) Anmeldenummer: 10728586.8
(22) Anmeldetag: 12.05.2010
(51) Int. Cl.: B29C 65/74, B29C 65/16

(54) **VERFAHREN ZUM PREFORMEN EINES TEXTILIENHALBZEUGS UND PREFORM-VORRICHTUNG**
METHOD FOR PRE-FORMING A TEXTILE SEMI-FINISHED PRODUCT AND PRE-FORMING DEVICE
PROCÉDÉ DE PRÉFORMAGE D'UN PRODUIT TEXTILE SEMI-FINI ET DISPOSITIF DE PRÉFORMAGE

(30) Priorität: 15.05.2009 DE 102009021591
(43) Veröffentlichungstag der Anmeldung: 21.03.2012
(73) Patentinhaber: Airbus Defence and Space GmbH, 85521 Ottobrunn (DE)
(72) Erfinder: KUNTZ, Julian, 86179 Augsburg (DE); STADLER, Franz, 85113 Böhmfeld (DE)
(74) Vertreter: LKGLOBAL Lorenz & Kopf PartG mbB Patentanwälte
(86) Internationale Anmeldenummer: PCT/DE2010/000543
(87) Internationale Veröffentlichungsnummer: WO 2010/130253

(56) Entgegenhaltungen:
- EP-A1- 1 298 075
- DE-A1- 4 133 040
- DE-A1- 4 333 877
- US-A- 3 654 019
- US-A- 4 029 535
- US-A- 4 847 462
- US-A- 4 945 203

## Beschreibung

Die Erfindung betrifft ein Verfahren zum Preformen eines textilen Halbzeugs gemäß Anspruch 1.

Gemäß einem zweiten Aspekt betrifft die Erfindung eine Preform-Vorrichtung gemäß Anspruch 7.

Das Preformen ist ein Schritt bei der Herstellung von Bauteilen aus Faserverbundwerkstoffen. Nach dem Zuschnitt sind die Schnittkanten des Textils in der Regel nicht mehr fixiert. Das führt dazu, dass das Textil leicht ausfransen kann, sich eine die Fasern zusammenhaltende Vernähung durch Laufmasche löst und so das Textil im unter Verwendung des Halbzeugs hergestellten Bauteil nicht mehr die gewünschte Anordnung hat.

Es ist daher bekannt, ein Textil zu verwenden, das einen aufschmelzbaren Binder umfasst. Vor dem Zuschneiden wird das Textil in einem Ofen erwärmt, sodass die einzelnen Fasern des Textils miteinander verkleben. Anschließend wird das Textil zugeschnitten. Durch die Verklebung der Fasern kommt es zu keinem Ausfransen mehr.

Nachteilig hieran ist, dass ein relativ starres Halbzeug erhalten wird, das sich zum nachfolgenden Tränken und Aushärten nur schwer in eine entsprechende Bauteilform einpassen lässt.

Ein gattungsgemäßes Verfahren ist aus der DE 199 52 443 A1 bekannt. Bei dem dort geschilderten Verfahren werden verschiedene Lagen des Textils miteinander vernäht, um die nötige Schiebefestigkeit zu erreichen, die zum Schneiden notwendig ist. Nachteilig hieran ist, dass das Textil an den Nähten zum Ausfransen neigt.

Aus der DE 693 04 042 T2 sind ein Verfahren und eine Vorrichtung zum Herstellen von strukturell verstärkten Vorformlingen bekannt. Bei diesen Vorformlingen werden einzelne Stellen durch Aufschmelzen eines Binders miteinander verbunden. Auf diese Weise werden mehrere Lagen miteinander verheftet, so dass sie leichter zu handhaben sind. Auch bei dem dort beschriebenen Verfahren kann es zum Ausfransen kommen.

Aus der DE 35 41 954 02 ist ein Verfahren zur Herstellung von Verbundkörpern bekannt, mit denen Verbundkörper mit scharfen Kanten hergestellt werden können. Dazu wird eine Teilhärtung des im Textil vorhandenen Kunstharzes durchgeführt, während die einzelnen Faserschichten durch dünne, elastische Trennfilme voneinander getrennt sind. Diese Trennfilme werden nachträglich entfernt und die teilgehärteten Faserschichten zum fertigen Verbundkörper verpresst. Auf das Problem des Ausfransens beim Schneiden geht die Druckschrift nicht ein.

Aus der US 5,418,035 A ist ein Verfahren zum Herstellen eines Faserverbundbauteils bekannt, bei dem die einzelnen Lagen ein Textil zunächst an einem Rand miteinander verheftet werden, um sie danach in eine Form einzubringen. Auf das Problem des Ausfaserns geht die Druckschrift nicht ein.

Aus der DE 10 2007 032 904 B3 ist ein Verfahren zur Strukturfixierung von textilen Flächengebilden bekannt, das ein Auseinanderfallen der textilen Halbzeuge beim Zuschnitt mit einfachen Mitteln zu verhindern sucht. Dazu werden zukünftige Lastfälle simuliert und die Bereiche des Halbzeugs identifiziert, die im daraus entstehenden Bauteil nur geringe Verschiebungen durch die Belastunggen erfahren. An diesen Stellen werden die Textilien miteinander verbunden. Zum Verhindern eines Ausfransens ist das Verfahren nicht ausgelegt.

Aus der EP 1 298 075 A1 ist ein Verfahren zum Herstellen eines flexiblen Schüttgutbehälters bekannt, bei dem zugeschnittene Kunststoff-Bändchengewebe entlang von zu verstärkenden Kanten auf ein Substrat angebracht werden. Dazu wird ein Laserstrahl auf eine absorbierende Substanz gerichtet, die sich daraufhin erwärmt, sodass das Substrat mit dem Kunststoff-Bändchengewebe verschweißt. Ein Trennen nach dem Verschweißen wird nicht beschrieben.

Aus der DE 43 33 877 A1 ist ein Verfahren zum Schneiden von Geweben mittels Laser bekannt. Beim Laserschneiden kommt ein Ausfransen nicht vor, sodass keine besonderen Vorkehrungen getroffen müssen, um ein Ausfransen zu verhindern.

Der Erfindung liegt die Aufgabe zugrunde, ausgefranste Ränder bei textilen Halbzeugen zu vermeiden.

Die Erfindung löst das Problem durch ein Verfahren nach Anspruch 1.

Vorteilhaft an der Erfindung ist, dass die Fasern des Textils benachbart zu einer späteren Zuschneide-Linie, also dem späteren Zuschnittrand, miteinander verbunden werden, sodass das Textil an ihren Rändern nicht ausfranst. Vorteilhaft ist zudem, dass dieses Fixieren nicht zu einer übermäßigen Stabilität und Steifigkeit des entstehenden Rohlings führt. So bleibt der entstehende Rohling drapierbar und kann auch an doppelt gekrümmte Geometrien angepasst werden. Es ist zudem möglich, kleine und komplex gestaltete Rohlinge herzustellen.

Vorteilhaft ist zudem, dass keine Zugabe an den Rändern notwendig ist, wie es bei Verfahren gemäß dem Stand der Technik notwendig ist. Derartige Ränder können in einer Festigkeitsberechnung nicht als tragend berücksichtigt werden, was zu erhöhten Bauteilgewichten bei dem fertigen Bauteil führt.

Vorteilhaft ist zudem, dass das Fixieren mittels Lasers automatisiert durchgeführt werden kann. Das ist insbesondere deshalb möglich, weil der Laserstrahl berührungsfrei über das Textil geführt werden kann. Dabei ist der Bereich, in dem die Fasern miteinander verbunden werden, relativ schmal, sodass der entstehende Rohling labil bleibt. Beispielsweise ist der Laserstrahl so gewählt, dass die Fasern auf einer Breite von unter einem Zentimeter miteinander verbunden werden.

Vorteilhaft beispielsweise gegenüber einem induktiven Erwärmen ist, dass die Auflage, auf der das Textil aufliegt, frei gewählt werden kann. Beim induktiven Erwärmen dürfen sich keine metallischen Gegenstände in der Nähe befinden. Wird Mikrowellenstrahlung verwendet, muss zudem sichergestellt sein, dass diese nicht in die Umgebung gelangt, da dies Personen verletzen könnte.

Vorteilhaft an der Erfindung ist zudem, dass mit dem Laser eine gleichmäßige Erwärmung möglich ist. So kann vorgesehen sein, dass beim Bestrahlen des Textils die Temperatur gemessen wird, beispielsweise berührungsfrei. Es kann dann die Laserleistung, der Laserstrahldurchmesser und/oder die Vorschrittgeschwindigkeit des Lasers so angepasst werden, dass eine voreingestellte Temperatur nicht überschritten wird, sodass das Textil nicht geschädigt wird. Es kann zudem sichergestellt werden, dass die Temperatur einen voreingestellten Temperatur-Stellenwert nicht unterschreitet, sodass eine sichere Verbindung der Fasern im Textil gewährleistet ist.

Im Rahmen der vorliegenden Beschreibung wird unter dem Fixieren der Fasern des Textils verstanden, dass die Fasern zumindest örtlich miteinander verbunden werden, sodass ein Ausfransen bei einem nachfolgenden Zuschneiden vermindert wird. Bevorzugt ist der aufschmelzbare Binder dabei bereits Teil des Textils. Theoretisch möglich wäre allerdings auch, dass der Binder unmittelbar vor dem Einstrahlen des Laserstrahls auf das Textil aufgebracht wird.

Unter dem Zerschneiden wird insbesondere ganz allgemein ein Trennen verstanden, das mit einem mechanischen Werkzeug durchgeführt werden kann, nicht aber muss.

Unter einem Binder wird insbesondere ein aufschmelzbarer Stoff verstanden, der in der Nähe der Fasern des Textils angeordnet ist oder selbst in der Form von Fasern vorliegt. Der Binder kann im Textil eingearbeitet sein oder auf diesem aufliegen. Beim Aufschmelzen verbindet der Binder die in der Umgebung befindlichen Fasern miteinander.

Erfindungsgemäß erfolgt das Fixieren der zumindest zwei Lagen entlang einer Fixier-Linie, wohingegen das Zuschneiden entlang einer Zuschneide-Linie erfolgt. Die Fixier-Linie hat von der Zuschneide-Linie einen Abstand, der so gewählt ist, dass ein Ausfransen des Textils vermindert oder unterdrückt wird. Beispielsweise beträgt dieser Abstand zwischen 0 und 5 mm. Dadurch wird erreicht, dass das Ausfransen von der Zuschneide-Linie aus spätestens dann stoppt, wenn eine Laufmasche von der Zuschneide-Linie ausgehend die Fixier-Linie erreicht hat.

Um die Fasern zu fixieren, kann gemäß einer bevorzugten Ausführungsform vorgesehen sein, dass die Lagen mit einer für das Laser-Licht transparenten Folie abgedeckt werden und der Laserstrahl durch die Folie eingestrahlt wird. Unter dem Merkmal, dass die Folie für das Licht des Lasers transparent ist, wird insbesondere verstanden, dass eine Absorption und eine Reflexion zusammen kleiner sind als 20%. Durch geeignete Wahl der Folien können Transmissionsraten von über 90% erreicht werden. Je höher die Transmissionsrate, desto geringer sind die Verluste und desto weniger Vorkehrungen müssen getroffen werden, um die Umgebung vor gestreutem Laserlicht zu schützen.

Insbesondere ist die Folie so transparent für die Laserstrahlung, dass sie während des Einstrahlens selbst nicht aufschmilzt. Bevorzugt wird die Folie zumindest zudem so gewählt, dass sie hinreichend ausgeprägte Trennoberflächeneigenschaften aufweist, sodass sie sich nach dem Fixieren der beiden Lagen wieder von den Lagen abnehmen lässt. Die Folie ist zudem bevorzugt so gewählt, dass der Laserstrahl bei senkrechtem Einfall zu höchstens 30% bezogen auf die Leistung reflektiert wird.

Unter dem erfindungsgemäßen Merkmal, dass der Laserstrahl so angestrahlt wird, dass der aufschmelzbare Binder des Textils lokal nur aufschmilzt und nicht verdampft, wird insbesondere verstanden, dass eine Strahlleistung und eine Vorschubgeschwindigkeit des Lasers so gewählt sind, dass an keiner Stelle eine Schädigungstemperatur überschritten wird, die zu einer Schädigung des Binders oder des Textils führt. Insbesondere wird die Leistungsdichte des Laserstrahls so gewählt, dass es zu keiner signifikanten Verkohlung kommt, das heißt, dass zwar möglicherweise ein gewisser Anteil des Binders und/oder von Fasern des Textils thermisch geschädigt ist, diese Schädigung aber so klein ist, dass sie bei der Berechnung der Festigkeit des aus dem textilen Halbzeug gefertigten Teils nicht berücksichtigt werden muss. Insbesondere wird die Leistungsdichte des Laserstrahls so gewählt, dass eine etwaige thermische Schädigung des Textils und/oder des Binders nur zu einer Festigkeitseinbuße von weniger als 10% führt.

Bevorzugt wird in das Verfahren hinsichtlich der Schritte des Fixierens und des Zuschneidens automatisch durchgeführt. Es kann zudem vorgesehen sein, dass das Anordnen der zumindest zwei Lagen des Textils ebenfalls automatisch durchgeführt wird.

Gemäß einer bevorzugten Ausführungsform wird das Textil auf einer Auflage angeordnet und vor dem Einstrahlen des Laserlichts wird Luft aus einem Bereich zwischen der Auflage und der Folie abgesaugt. Dadurch werden die Fasern relativ zueinander und zur Auflage fixiert. Der verminderte Druck führt zudem dazu, dass die Gefahr einer Oxidation beim Erhitzen vermindert ist. Es kann zudem vorgesehen sein, dass der Bereich zwischen Folie und Auflage vor dem Einstrahlen des Laserstrahls mit einem Schutzgas gespült wird. Günstig ist es, wenn der Restdruck kleiner ist als 200 mbar, insbesondere kleiner als 100 mbar.

Bevorzugt wird das Textil vor dem Zuschneiden fixiert, wobei das Zuschneiden mit einer mechanischen Schneidvorrichtung erfolgt. Alternativ wird das Zuschneiden mit einem Laser durchgeführt, insbesondere mit dem gleichen Laser, der zum Fixieren verwendet wird. Hieran kann aber nachteilig sein, dass es beim Schneiden zu einer thermischen Schädigung der Fasern und/oder des Binders kommt, sodass etwaige Festigkeitseinbußen des fertigen Bauteils hingenommen werden müssen.

Die Schritte des Anordnens, Zuschneidens und Fixierens können für mehrere Textil-Lagen wiederholt werden, bis ein eine Mehrzahl an Textil-Lagen umfassendes Halbzeug hergestellt ist. Es ist zudem möglich, jeweils zwischen dem Auflegen einer weiteren Textil-Lage auf dem bereits zugeschnittenen Vorkörper jeweils eine Folie aufzulegen, den Zwischenraum zu evakuieren und dann wie oben beschrieben mittels Laser den Vorkörper mit der zusätzlichen Textil-Lage zu verbinden und dann die zusätzliche Textil-Lage zuzuschneiden. Es ist möglich, zunächst zu fixieren und dann zu zerschneiden. Es ist aber auch möglich, beides gleichzeitig durchzuführen oder erst zu zerschneiden und dann zu fixieren.

Unter einer erfindungsgemäßen Preform-Vorrichtung zum Preformen eines textilen Halbzeugs wird insbesondere eine Vorrichtung verstanden, die ausgebildet und eingerichtet ist, um eine Vielzahl von Textilienhalbzeugen herzustellen. Insbesondere sind die Auflage, die Zuschneide-Vorrichtung und FixierVorrichtung aneinander befestigt. Die Zuschneide-Vorrichtung und die FixierVorrichtung sind zudem in der Regel automatische Vorrichtungen, die mit einem Motor betrieben sind.

Unter der Auflage wird jede Vorrichtung verstanden, die die Lagen der Fasern des Textils fixieren kann. Die Auflage kann einen Tisch, aber auch ein luftundurchlässiges Förderband aufweisen.

Erfindungsgemäß umfasst die Preform-Vorrichtung eine Ansteuereinheit, die ausgebildet ist zum Bewegen des Lasers so, dass die
Fasern des Textils entlang einer Fixier-Linie fixiert werden, und zum Bewegen der Zuschneide-Vorrichtung so, dass sie je die Lage entlang einer Zuschneide-Linie zerschneidet wobei die Fixier-Linie einen so kleinen Abstand von der Zuschneide-Linie hat, dass ein Ausfransen des Textils vermindert oder unterdrückt wird.

Beispielsweise kann vorgesehen sein, dass die Zuschneide-Linie von der Fixier-Linie einen Abstand von weniger als 10 mm hat. Die Ansteuereinheit kann mit Eingabemitteln verbunden sein, die mittels der die Lage der Zuschneide-Linie und/oder der Fixier-Linie relativ zur Auflage festgelegt werden kann. Beispielsweise kann die Ansteuereinheit über eine Schnittstelle verfügen, so dass CAD-Daten eingelesen werden können.

Bevorzugt ist die Ansteuereinheit eingerichtet zum Bewegen des Lasers mit einer Geschwindigkeit, die in Bezug auf die Strahlintensität so gewählt ist, dass beim Einstrahlen des Laserstrahls der Binder lokal nur aufschmilzt und nicht verdampft oder verkohlt. Dazu kann es vorgesehen sein, dass die Ansteuereinheit mit einer Temperaturmess-Vorrichtung verbunden ist, die die Temperatur an der Stelle misst, an der sich der Laserstrahl gerade befindet.

Bevorzugt umfasst die Fixiervorrichtung eine Folienauflege-Vorrichtung zum Auflegen einer Folie und eine Differenzdruck-Aufbringvorrichtung zum Anlegen eines Differenzdrucks, sodass sich die Folie an das flächige Textil anschmiegt. Diese Folienauflege-Vorrichtung kann beispielsweise automatisiert sein.

Vorzugsweise umfasst die Preform-Vorrichtung eine Abschirmvorrichtung, die so mitgeführt wird, dass reflektierte Laserstrahlen absorbiert werden. So wird eine Gefährdung von Personen vermieden.

Im Folgenden wird die Erfindung anhand eines exemplarischen Ausführungsbeispiels näher erläutert. Dabei zeigt
- Figur 1: eine erfindungsgemäße Vorrichtung zum Durchführen eines erfindungsgemäßen Verfahrens, und
- Figur 2: eine schematische Ansicht eines textilen Halbzeugs mit zugehörigen Fixier-Linien und Zuschneide-Linien.

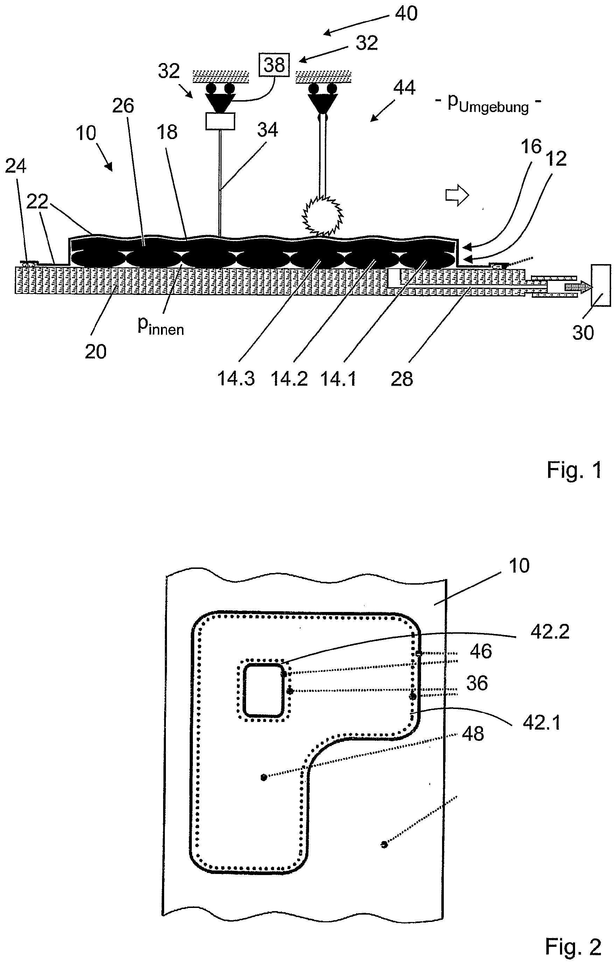

Figur 1 zeigt ein flächiges Textil 10 in Form eines Multiaxialgeleges oder eines Gewebes aus Verstärkungsfasern. Das Multiaxialgelege oder Gewebe kann Kohlenstofffasern umfassen oder daraus bestehen. Das flächige Textil 10, das auch als Halbzeug bezeichnet werden kann, besitzt eine erste Lage 12 aus einer Vielzahl von Faserbündeln 14.1, 14.2, ...., die parallel zueinander verlaufen und bevorzugt alle die gleiche Anzahl an in Figur 1 nicht sichtbaren Kohlenstofffasern umfassen.

Das flächige Textil 10 umfasst zudem eine zweite Lage 16 aus Faserbündeln, von denen nur das Faserbündel 18 im Querschnitt zu sehen ist. Die Faserbündel 14 einerseits und 18 andererseits schließen einen nicht eingezeichneten Faserwinkel ein. Das flächige Textil 10 ist ein Halbzeug, das in einem späteren Verarbeitungsschritt mit einem Matrixwerkstoff, wie beispielsweise einem Kunstharz infiltriert wird, so dass sich ein Laminat bildet. Durch Aushärten in einer Form werden so beispielsweise Flugzeugteile hergestellt. Die Erfindung bezieht sich daher auch auf ein Verfahren zum Herstellen eines Flugzeugteils oder sonstigen Strukturkomponenten.

Das flächige Textil 10 liegt auf einer Auflage 20, die durch eine ebene, möglichst glatte Unterlageplatte gebildet ist. Zum Verbinden der ersten Lage 12 mit der zweiten Lage 16 wird eine Folie 22 auf die oben liegende Lage 16 aufgelegt. Bei der Folie handelt es sich beispielsweise um eine Polyethylen-Folie, die beispielsweise eine Dicke von 12 Mikrometern haben kann. Die Folie 22 wird über Dichtleisten 24 auf die Auflage 20 gedrückt oder durch Dichtungsbänder 24 mit der Unterlage verklebt, so dass sich eine gasdichte Verbindung einstellt. Zwischen der Auflage 20 und Folie 22 bildet sich ein Zwischenraum 26, in dem das flächige Textil angeordnet ist.

Über eine Vorrichtung zum Anlegen eines Vakuums in Form eines Absaugkanals 28 ist der Zwischenraum 26 mit einer Vakuumpumpe 30 verbunden, die kontinuierlich Luft aus dem Zwischenraum 26 absaugt, so dass sich zwischen einem Umgebungsdruck p_{Umgebung} und einem Innendruck pᵢₙₙₑₙ im Zwischenraum 26 eine Druckdifferenz Δp von mehr als 800 Millibar einstellt. Insbesondere ist der Umgebungsdruck der Atmosphärendruck von ca. 1013 Millibar und der Innendruck liegt unterhalb von 200 Millibar, insbesondere unter 100 Millibar. Im vorliegenden Fall wird ein Innendruck von pᵢₙₙₑₙ = 50 Millibar angelegt. Es ist aber auch möglich den Umgebungsdruck p_{Umgebung} dadurch zu erhöhen, dass eine Druckglocke übergestülpt wird.

Durch das Anlegen des Unterdrucks an den Zwischenraum 26 schmiegt sich die Folie 22 an das flächige Textil 10 an, komprimiert dieses in Dickenrichtung und fixiert so die beiden Lagen 12, 16 relativ zueinander. Ist der vorangestellte Innendruck pᵢₙₙₑₙ erreicht, so fährt ein Laser 32 eine voreingestellte Bahn ab, so dass ein Laserstrahl 34 durch die Folie 22 auf die erste Lage 12 und zweite Lage 16 fällt. Ein Binder, mit dem die jeweiligen Faserbündel 14 imprägniert sind, schmilzt dadurch auf und es entsteht eine Fixier-Linie 36 (vgl. Figur 2). Der Verlauf der Fixier-Linie 36 ist von einer Ansteuereinheit 38 vorgegeben worden, die mit dem Laser 32 in Verbindung steht. Der Laser 32, Absaugkanal 28, die Vakuumpumpe 30 und die Ansteuereinheit 38 sind Teil einer Fixiervorrichtung 40.

Figur 2 zeigt einen Blick von oben auf das flächige Textil 10. Es ist zu erkennen, dass die Fixier-Linie 36 in einem Inneren des flächigen Textils 10 angeordnet ist. Die Fixier-Linie besteht zudem im vorliegenden Beispiel aus zwei geschlossenen Linienzügen, nämlich einem ersten Linienzug 42.1 und einem zweiten Linienzug 42.2.

Figur 1 zeigt zudem schematisch eine Zuschneide-Vorrichtung 44 zum spanenden Trennen des flächigen Textils 10 entlang einer Zuschneide-Linie 46 (Figur 2). Die Zuschneide-Linie 46 besteht ebenfalls aus zwei Linienzügen, die einen Abstand von beispielsweise einem Millimeter von der Fixier-Linie 36 haben.

In einem nachfolgenden Arbeitsschritt kann das fertige textile Halbzeug 48, das auch als Zuschnitt bezeichnet werden kann, entnommen werden. In nachfolgenden Arbeitsschritten wird das Halbzeug 48 mit einem Harz getränkt, das Harz ausgehärtet und so ein Strukturoberteil hergestellt.

### Bezugszeichenliste

- 10: flächiges Textil
- 12: erste Lage
- 14: Faserbündel
- 16: zweite Lage
- 18: Faserbündel

- 20: Auflage
- 22: Folie
- 24: Dichtleiste
- 26: Zwischenraum
- 28: Absaugkanal

- 30: Vakuumpumpe
- 32: Laser
- 34: Laserstrahl
- 36: Fixier-Linie
- 38: Ansteuereinheit

- 40: Fixiervorrichtung
- 42: Linienzug
- 44: Zuschneide-Vorrichtung
- 46: Zuschneide-Linie
- 48: Halbzeug

## Patentansprüche

1. Verfahren zum Preformen eines textilen Halbzeugs (48) zum Herstellen einer Strukturkomponente oder eines sonstigen Flugzeugteils, mit den Schritten:
(a) Anordnen eines Textils, wobei das Textil
- eine erste Lage (12) und eine zweite Lage (16) aufweist, welche aus zumindest teilweise übereinander angeordneten Fasern bestehen, und
- einen Binder aufweist, welcher ein aufschmelzbarer Stoff ist, der in der Nähe der Fasern des Textils angeordnet ist,
(b) Fixieren von Fasern der ersten Lage an Fasern der zweiten Lage und
(c) danach Zuschneiden des Textils,
(d) wobei das Fixieren der Fasern des Textils den Schritt Einstrahlen eines Laserstrahls (34), so dass der Binder des Textils lokal nur aufschmilzt und nicht verdampft, umfasst, wobei
(e) das Fixieren der Fasern des Textils entlang einer Fixier-Linie (36) erfolgt, das Zuschneiden entlang einer Zuschneide-Linie (46) erfolgt und
(f) die Fixier-Linie (36) einen so kleinen Abstand von der Zuschneide-Linie (46) hat, dass ein Ausfransen des Textils unterdrückt wird.

2. Verfahren nach Anspruch 1, **gekennzeichnet durch** die Schritte:
- Abdecken der Lagen (12, 16) mit einer für Licht des Lasers transparenten Folie (22) und
- Einstrahlen des Laserstrahls (34) durch die Folie (22).

3. Verfahren nach Anspruch 2, **dadurch gekennzeichnet, dass** das Textil auf einer Auflage (20) angeordnet wird und vor dem Einstrahlen des Laserstrahls (34) Luft aus einem Bereich zwischen der Auflage (20) und der Folie (22) abgesaugt wird.

4. Verfahren nach einem der vorstehenden Ansprüche, **dadurch gekennzeichnet, dass** das Fixieren der Fasern vor dem Zuschneiden erfolgt und das Zuschneiden des Textils mit einer mechanischen Schneidvorrichtung (44) erfolgt.

5. Verfahren nach einem der vorstehenden Ansprüche, **dadurch gekennzeichnet, dass** die Schritte des Anordnens, Zuschneidens und Fixierens für mehrere Textil-Lagen wiederholt werden, bis ein eine Mehrzahl an Lagen umfassendes Halbzeug (48) hergestellt ist.

6. Verfahren nach einem der vorstehenden Ansprüche, **gekennzeichnet durch** die Schritte Tränken des textilen Halbzeugs nach dem Fixieren und Zuschneiden und Aushärten des getränkten Halbzeugs, so dass ein Faserverbundbauteil erhalten wird.

7. Preform-Vorrichtung zum Preformen eines textilen Halbzeugs zum Herstellen einer Strukturkomponente oder eines sonstigen Flugzeugteils, mit
(a) einer Auflage zum Anordnen eines Textils, wobei das Textil
- eine erste Lage (12) und eine zweite Lage (16) aufweist, welche aus zumindest teilweise übereinander angeordneten Fasern bestehen, und
- einen Binder aufweist, welcher ein aufschmelzbarer Stoff ist, der in der Nähe der Fasern des Textils angeordnet ist,
(b) einer Zuschneide-Vorrichtung zum Zuschneiden des Textils und
(c) einer Fixiervorrichtung (40) zum Fixieren von Fasern der ersten Lage an Fasern der zweiten Lage des Textils aneinander,
(d) wobei die Fixiervorrichtung (40) einen Laser (32) umfasst, der in seiner Strahlintensität so eingerichtet ist, dass beim Einstrahlen eines Laserstrahls (34) der Binder des Textils lokal nur aufschmilzt und nicht verdampft, wobei die Preform-Vorrichtung (e) eine Ansteuereinheit (38) aufweist, die ausgebildet ist zum
- Bewegen des Lasers (32) so, dass die Fasern des Textils entlang einer Fixier-Linie (36) fixiert werden und zum anschließenden
- Bewegen der Zuschneide-Vorrichtung (44) so, dass sie die Fasern des Textils entlang einer Zuschneide-Linie (46) zerschneidet, wobei die Fixier-Linie (36) einen so kleinen Abstand von der Zuschneide-Linie (46) hat, dass ein Ausfransen des Textils unterdrückt wird.

8. Preform-Vorrichtung zum Preformen eines textilen Halbzeugs nach Anspruch 7, **dadurch gekennzeichnet, dass** die Ansteuereinheit (38) eingerichtet ist zum Bewegen des Lasers (32) mit einer Geschwindigkeit, die in Bezug auf die Strahlintensität so gewählt ist, dass beim Einstrahlen eines Laserstrahls (34) der Binder lokal nur aufschmilzt und nicht verdampft.

9. Preform-Vorrichtung zum Preformen eines textilen Halbzeugs nach einem der Ansprüche 7 bis 8, **dadurch gekennzeichnet, dass** die Fixiervorrichtung
(i) eine Folienauflege-Vorrichtung (42) zum Auflegen einer Folie (22), und
(ii) eine Differenzdruck-Aufbringvorrichtung zum Anlegen eines Differenzdrucks (Δp), so dass sich die Folie (22) an das flächige Textil anschmiegt, umfasst.

## Claims

1. A method for preforming a textile semi-finished product (48) for manufacturing a structural component or another airplane component, with the steps:
(a) arranging a textile, wherein the textile
- comprises a first layer (12) and a second layer (16) which consist of fibers that are arranged at least in part on top of each other, and
- comprises a binder which is a meltable material that is arranged in the vicinity of the fibers of the textile,
(b) fixing-in-position of fibers of the first layer to fibers of the second layer and
(c) then cutting-to-size of the textile,
(d) wherein the fixing-in-position of the fibers of the textile comprises the step of irradiating a laser beam (34) so that the binder of the textile is melted only in a localized fashion but not evaporated,
wherein
(e) the fixing-in-position of the fibers of the textile occurs along a fix-in-position line (36), the cutting-to-size occurs along a cut-to-size line (46), and
(f) the fix-in-position line (36) is located at such a small distance relative to the cut-to-size line (46) that any fraying of the textile is suppressed.

2. The method according to claim 1, **characterized by** the steps:
- covering the layers (12, 16) with a film (22) that is transparent for the light of the laser and
- irradiating the laser beam (34) through the film (22).

3. The method according to claim 2, **characterized in that** the textile is arranged on a substrate (20) and air is suctioned from an area between the substrate (20) and the film (22) before irradiating the laser beam (34).

4. The method according to any one of the preceding claims, **characterized in that** the fixing-in-position of the fibers occurs before the cutting-to-size, and the cutting-to-size of the textile occurs using a mechanical cutting device (44).

5. The method according to any one of the preceding claims, **characterized in that** the steps of arranging, cutting-to-size and fixing-in-position are repeated for several textile layers until a semi-finished product (48) comprising a plurality of layers is manufactured.

6. The method according to any one of the preceding claims, **characterized by** the steps impregnating the textile semi-finished product after the fixing-in-position and cutting-to-size, and curing the impregnated semi-finished product in order to obtain a composite fiber component.

7. A preform apparatus for preforming a textile semi-finished product for manufacturing a structural component or another airplane component, with
(a) a substrate for arranging a textile, wherein the textile
- comprises a first layer (12) and a second layer (16) which consist of fibers that are arranged at least in part on top of each other, and
- comprises a binder which is a meltable material that is arranged in the vicinity of the fibers of the textile,
(b) a cut-to-size device configured to cut the textile to size, and
(c) a fix-in-position device (40) configured to fix fibers of the first layer to fibers of the second layer of the textile,
(d) wherein the fix-in-position device (40) comprises a laser (32) that is adjusted in terms of its radiation intensity such that the binder of the textile is only melted in a localized fashion but not evaporated during irradiating a laser beam (34),
wherein the preform apparatus comprises
(e) a control unit (38) that is configured to
- move the laser (32) in such a way that the fibers of the textile are fixed in position along a fix-in-position line (36), and subsequenty to
- move the cut-to-size device (44) in such a way that it cuts apart the fibers of the textile along a cut-to-size line (46), wherein the fix-in-position line (36) is located at a distance relative to the cut-to-size line (46) that is so small that any fraying of the textile is suppressed.

8. The preform apparatus for preforming a textile semi-finished product according to claim 7, **characterized in that** the control unit (38) is configured to move the laser (32) at a speed that is selected with regard to the radiation intensity such that, during irradiating a laser beam (34), the binder is only melted on in a localized fashion but not evaporated.

9. The preform apparatus for preforming a textile semi-finished product according to any one of claims 7 to 8, **characterized in that** the fix-in-position device comprises
(i) a film placement device (42) configured for the placement of a film (22), and
(ii) a differential pressure application device for the application of a differential pressure (Δp) so that the film (22) adapts to the flat textile.

## Revendications

1. Procédé de préformage d'un produit semi-fini textile (48) pour la fabrication d'un composant structurel ou d'un autre composant d'aéronef, comprenant les étapes:
(a) l'aménagement d'un textile, le textile
- comprend une première couche (12) et une seconde couche (16) composées de fibres qui sont au moins en partie l'une sur l'autre, et
- comprend un liant qui est un matériau fusible qui est disposé au voisinage des fibres du textile,
(b) fixation en position des fibres de la première couche sur les fibres de la seconde couche, et
(c) puis découpage à la taille du textile,
(d) dans lequel la fixation en position des fibres comprend l'étape d'irradiation d'un faisceau laser (34), pour que le liant du textile n'est fondu que de manière localisée mais non évaporée,
dans lequel
(e) la fixation en position des fibres se produisant le long d'une ligne à position fixe (36), la découpe à la taille se produisant le long d'une ligne de coupe à la taille (46), et
(f) la ligne à position fixe (36) est située à une distance si petite par rapport à la ligne de découpe à la taille (46) que tout effilochage du textile est supprimé.

2. Procédé selon la revendication 1, **caractérisé par** les étapes:
- recouvrir les couches (12, 16) d'un film (22) transparent pour la lumière du laser et
- irradier le faisceau laser (34) à travers le film (22).

3. Procédé selon la revendication 2, **caractérisé en ce que** le textile est disposé sur un substrat (20) et de l'air est aspiré à partir d'une zone située entre le substrat (20) et le film (22) avant l'irradiation du faisceau laser (34).

4. Procédé selon l'une quelconque des revendications précédentes, **caractérisé en ce que** la fixation en position des fibres intervient avant la découpe à la taille, et la découpe à la taille du textile se fait à l'aide d'un dispositif de coupe mécanique (44).

5. Procédé selon la revendication 1, **caractérisé en ce que** les étapes d'aménagement, de découpe à la taille et de fixation en position sont répétées pour plusieurs couches de textile jusqu'à ce qu'un produit semi-fini (48) comprenant une pluralité de couches est fabriqué.

6. Procédé selon l'une quelconque des revendications précédentes, **caractérisé par** les étapes consistant à imprégner le produit semi-fini textile après la fixation en position et la découpe à la taille, et durcir le produit semi-fini imprégné afin d'obtenir un composant de fibre composite.

7. Un appareil de préforme pour préformer un produit semi-fini textile pour fabriquer un composant structurel ou un autre composant d'un aéronef, avec
(a) un substrat pour l'aménagement d'un textile, dans lequel le textile
- comprend une première couche (12) et une seconde couche (16) composées de fibres qui sont au moins en partie l'une sur l'autre, et
- comprend un liant qui est un matériau fusible qui est disposé au voisinage des fibres du textile,
(b) un dispositif de découpe à la taille configuré pour couper le textile à la taille, et
(c) un dispositif de fixation en position (40) configuré pour fixer des fibres de la première couche à des fibres de la seconde couche du textile;
(d) dans lequel le dispositif (40) à position fixe comprend un laser (32) ajusté en fonction de son intensité de rayonnement faisceau, pour que le liant du textile n'est fondu que de manière localisée mais non évaporée pendant l'irradiation d'un faisceau laser (34), dans lequel la préforme comprend
(e) une unité de commande (38) configurée pour
- déplacer le laser (32) de telle sorte que les fibres soient fixées en position le long d'une ligne à position fixe (36), et ensuite
- déplacer le dispositif de coupe à la taille (44) de manière à couper les fibres du textile le long d'une ligne à coupe à la taille (46), dans la ligne à position fixe (36) est située à une distance si petite par rapport à la ligne de coupe à taille (46) que tout effilochage du textile est supprimé.

8. Appareil de préforme pour préformer un produit semi-fini textile selon la revendication 7, **caractérisé en ce que** l'unité de commande (38) est configurée pour déplacer le laser (32) à une vitesse choisie par rapport à l'intensité de rayonnement, lors de l'irradiation d'un faisceau laser (34), le liant n'est fondu que de manière localisée mais non évaporé.

9. Appareil de préforme pour préformer un produit semi-fini textile selon l'une quelconque des revendications 7 à 8, **caractérisé en ce que** le dispositif de fixation en position comprend
(i) un dispositif de placement de film (42) configuré pour le placement d'un film (22), et
(ii) un dispositif d'application de pression différentielle pour l'application d'une pression différentielle (Δp) de sorte que le film (22) s'adapte au textile spatial.
